# EUROPEAN PATENT APPLICATION

(11) **EP 4 112 213 A1**
(43) Date of publication of application: **04.01.2023**
(21) Application number: 21761921.2
(22) Date of filing: 04.02.2021
(51) Int. Cl.: B23D 61/04

(54) **CIRCULAR SAW BLADE**

(30) Priority: 28.02.2020 JP 2020033159
(71) Applicant: Kanefusa Kabushiki Kaisha, Ohguchi-cho, Niwa-gun Aichi 480-0192 (JP)
(72) Inventor: OKABE, Fuminori, Niwa-gun, Aichi 480-0192 (JP)
(74) Representative: Maikowski & Ninnemann Patentanwälte Partnerschaft mbB
(86) International application number: PCT/JP2021/004057
(87) International publication number: WO 2021/171945

(57) **Abstract**

Along metal sheet is rolled in a width direction to form a hollow tube while being delivered. A seam appeared in a longitudinal direction of a tubular body is electrically welded to form an electric-resistance-welded tube. The electric-resistance-welded tube is cut in a predetermined size by a circular saw cutting machine which travels in synchronicity with the electric-resistance-welded tube during its production process. A weld bead remains at the seam of the electric-resistance-welded tube so that the weld bead remained in the tube may be involved when the electric-resistance-welded tube is cut by the circular saw blade. Therefore, there is a problem to be solved that a significant load may be generated on a second rake face of the tip when the cutting tip of the circular saw blade bites debris in the tube, which may lead to the chipping or missing of the tips.

**Solution to Problem**

A circular saw blade has a plurality of cutting tips 10 joined at an outer circumference of a base metal. Each of the cutting tips 10 includes a first rake face 14 located at a front of the tip of the circular saw blade in a rotation direction of the circular saw blade, a flank 18 located in an outer circumferential direction of the circular saw blade, and a second rake face 22 adjacent to the first rake face 14 on a side of an axis of the circular saw blade. The center of the second rake face 22 is configured to project in the rotation direction of the circular saw blade.

## Description

### Technical Field

The present invention relates to circular saw blades, more particularly to, for example, improved cutting tips for a circular saw blade configured to cut an electric-resistance-welded tube that is moving.

### Background Art

Electric-resistance-welded tubes have been widely used and are usually formed of a long metal sheet rolled in a width direction to form a tubular shape. A seam (joint) is formed in a longitudinal direction and is electrically welded to form a hollow tubular body. For electrically welding a seam of an electric-resistance-welded tube, means such as highfrequency electric resistance welding or medium-frequency induction heating welding may be adopted. Since these welding means do not require any welding materials, such as a welding rod or a welding wire, the beads, which form weld scars, and the tubular body are formed of substantially the same material. Therefore, there is almost no difference in hardness between these two. One streak of a weld bead remains as a weld scar at the seam of the electric-resistance-welded tube.

Electric-resistance-welded tubes may be continuously and consistently produced in a factory, from a formation of a metal sheet into a hollow tubular body to until the tubular body is cut to a specific length. That is, a flat metal sheet (e.g., steel strip), which is to subsequently become a tubular body, is continuously delivered in a longitudinal direction. The flat metal sheet is then rolled in a width direction, and fed out as a long tubular body having a predetermined diameter (roll forming). Since there is one seam (joint) to be formed in the longitudinal direction of the rolled tubular body, the seam is formed by electrically welding on an upstream side of a production process. This welding is done in synchronicity with the delivery of the tubular body.

As a result, a long electric-resistance-welded tube is produced, the tube having a seam sealed by the weld bead. In a downstream portion of the process, after the tube has gone through the welding process, the weld bead still remains in the seam of the electric-resistance-welded tube. This occurs even though a projecting portion of the weld bead remained on an outer circumferential surface and on an inner circumferential surface of the electric-resistance-welded tube is trimmed by a grinder. The continuously delivered electric-resistance-welded tube is cut into a tubular body having a desired length by a circular saw cutting machine traveling in synchronicity with the electric-resistance-welded tube as the tube travels further downstream.

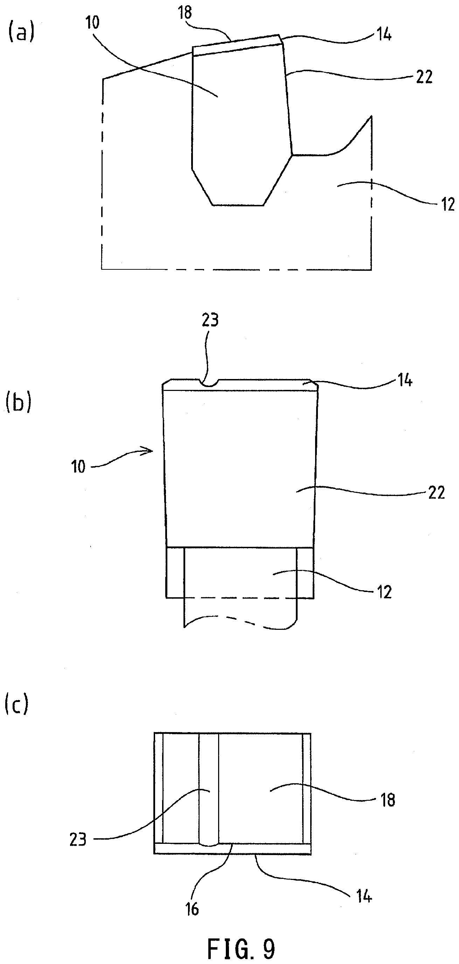

As the present invention relates to an improvement to cutting tips for a circular saw blade, the cutting tips of a conventional circular saw blade will be briefly described. FIG. 9(a) is an enlarged side view of a cutting tip 10 for a circular saw blade used for a traveling-type circular saw cutting machine. FIG. 9(b) is a front view illustrating a rake face located at a front of the cutting tip 10 shown in FIG. 9 (a) in a rotation direction. FIG. 9(c) is a plan view of a flank 18 of the cutting tip 10, the flank 18 being located in an outer circumferential direction of the circular saw blade. More specifically, each of the cutting tips 10 brazed on an outer circumference of a base metal 12 includes a first rake face 14, a flank 18, and a second rake face 22. The first rake face 14 is located at the front of the circular saw blade in a rotation direction. The flank 18 defines a first cutting edge 16 at an intersection line between the flank 18 and the first rake face 14. The second rake face 22 is located at the front of the circular saw blade in a rotation direction and is adjacent to the first rake face 14 on a side of an axis of the circular saw blade. Reference numeral 23 in FIGS. 9 represent a release groove (nick). The release groove 23 may be used to separate cutting chips generated while cutting a workpiece.

### Citation List

### Patent Literature

Patent Literature 1: JP6339764B
Patent Literature 2: JPH08-309609A

### Summary of Invention

### Technical Problem

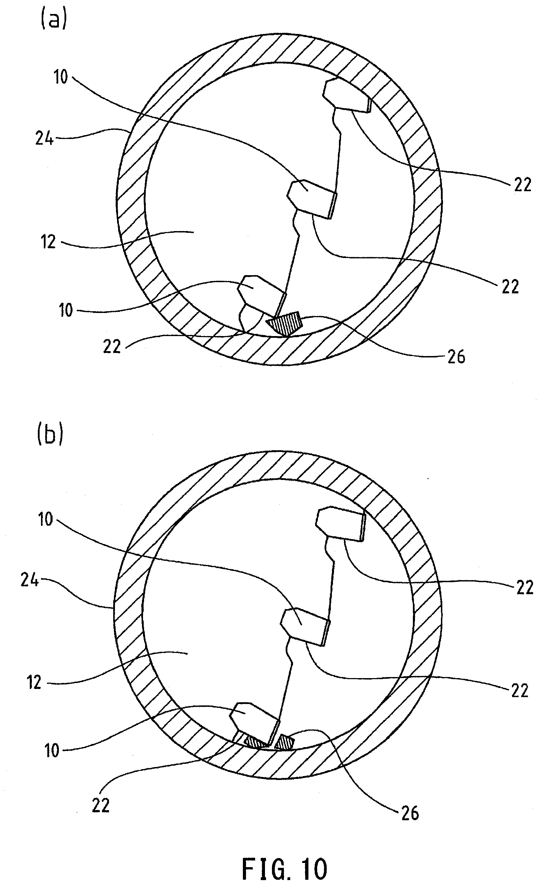

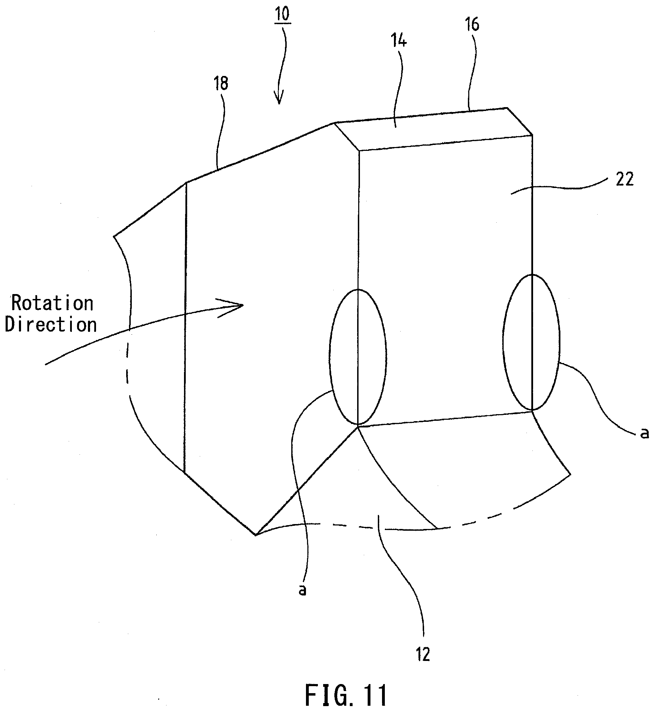

FIG. 10 is a cross-sectional view illustrating a situation where an electric-resistance-welded tube 24 is being cut by a traveling-type circular saw cutting machine. As described-above, the weld bead on the electric-resistance-welded tube 24 is trimmed by a grinder. Therefore, as shown in FIG. 10(a), the trimmed weld bead 26 is scattered and remains in the tube. As shown in FIG. 10(b), the second rake face 22 of a subsequent cutting tip 10 then bites the weld bead 26 remaining within the bottom of the tube between an inner wall of the tube and the cutting tip 10 as the circular saw blade continues to rotate. At this moment, a significant impact and/or load is concentrated on the second rake face 22 of the cutting tip 10, which tends to cause excessive wear and chipping of the second rake face 22. For example, for the cutting tip 10 illustrated in the perspective view of FIG. 11, spots a near the joints with the base metal 12 on the both sides of the second rake face 22 may be stress concentration points due to the cutting tip 10 biting into the weld bead 26. Therefore, these stress concentration spots a may be the spots where wear or chipping are more likely to occur. Since a hollow tubular body made of tensile steel, which as a material has a high tensile strength (e.g., exceeding 1000N/mm²) even if it is not an electric-resistance-welded tube, cutting tips of a conventional circular saw blade may not bite well into the tubular body.

### Solution to Problem

In order to solve the problem and achieve a desired object, the present invention according to claim 1 is to provide a circular saw blade having a plurality of cutting tips joined at an outer circumference of a base metal. Each of the cutting tips includes a first rake face, a flank, and a second rake face. The first rake face is located at a front of the circular saw blade in a rotation direction. The flank is configured to define a first cutting edge at an intersection line with the first rake face and is located at an outer circumference of the circular saw blade. The second rake face is located at a front of the circular saw blade in the rotation direction and is adjacent to the first rake face on an axis side of the circular saw blade. The center of the second rake face projects forward in the rotation direction of the circular saw blade. According to the invention of claim 1, since the second rake face of the cutting tip projects forward in the rotation direction of the circular saw blade, an impact stress received during cutting a workpiece, such as an electric-resistance-welded tube, with the circular saw blade may be concentrated toward the center of the second rake face. Additionally, this impact stress may hardly spread to both sides of the second rake face. This may reduce a risk of chipping the cutting tips and a risk of the tips falling off the base metal. Thereby, the life-span of the circular saw blade may be extended.

According to the invention defined in claim 2, the second rake face is configured to define a second cutting edge at an intersection line with the flank. According to the invention of claim 2, corners of the flank, lateral sides, and the second rake face of the cutting tip become less likely to chip. This is in part due to an angle defined by the lateral side and the second cutting edge being increased due to the face bevel angles of the second cutting edges on both sides of the cutting tip.

### Advantageous Effects of Invention

According to the circular saw blade of the present invention, since the center of a second rake face 22 of a cutting tip 10 is configured to project forward in the rotation direction of a circular saw blade, an impact stress would not be concentrated on the ends of the second rake face 22, even if a significant impact force occurs as a weld bead 26 is bitten into during cutting a workpiece. This may reduce a risk of chipping of the cutting tips and breakage and/or missing of a joint between the cutting tip 10 and the base metal 12. Thereby, the life-span of the circular saw blade may be expanded.

### Brief Description of Drawings

FIG. 1(a) is a plan view of a cutting tip according to an exemplary embodiment of the present invention. FIG. 1(b) is a front view showing a second rake face of the tip. FIG. 1(c) is a side view of an entire circular saw blade.
FIG. 2 is an enlarged view of a flank of the cutting tip shown in FIG. 1(a). FIG. 2 illustrates the first rake face is formed in a triangular shape.
FIG. 3 is an enlarged view of the first rake face and the second rake face of the cutting tip shown in FIG. 1(b). FIG. 3 illustrates the first rake face is in the center and is formed in a triangular shape.
FIG. 4 is a perspective view of a cutting tip according to an exemplary embodiment illustrating a projection of the second rake face inclined to the right and left with a flat section interleaved in the center.
FIG. 5(a) is a plan view of the cutting tip according to a second exemplary embodiment of the present invention. FIG. 5(b) is a front view of the second rake face of the tip.
FIG. 6(a) is a plan view of a cutting tip according to a third exemplary embodiment of the present invention. FIG. 6(b) is a front view of the second rake face of the tip.
FIG. 7(a) is a plan view of a cutting tip according to a fourth exemplary embodiment of the present invention. FIG. 7(b) is a front view of the second rake face of the tip.
FIGS. 8(a) to 8(d) illustrate polygonal first rake faces formed on the cutting tips according to exemplary embodiments. FIG. 8(a) is a triangular (fan shaped) first rake face. FIG. 8(b) is a rectangular first rake face. FIG. 8(c) is a pentagonal first rake face. FIG. 8(d) is a hexagonal first rake face.
FIG. 9(a) is an enlarged side view of a cutting tip for a circular saw blade. FIG. 9(b) is a front view illustrating a rake face of the cutting tip. FIG. 9(c) is a plan view of a flank of the cutting tip.
FIGS. 10(a) and 10(b) are cross-sectional views illustrating phases during cutting an electric-resistance-welded tube with a traveling-type circular saw cutting machine. FIG. 10(a) illustrates a state where a bead remains on a bottom and within the tube. FIG. 10(b) illustrates a state where the bead has been bitten into by the second rake face of the cutting tip while the bead is held to an inner wall of the tube.
FIG. 11 is a perspective view of the cutting tip shown in FIG. 9, in which spots on both sides of the second rake face serve as stress concentration spots due to the biting of the bead.

### Description of Embodiments

Hereinafter, exemplary embodiments of cutting tips joined to a circular saw blade according to the present invention will be described with reference to the drawings. The above-described electric-resistance-welded tube is considered to be an object to be cut (workpiece) with the circular saw blade according to the exemplary embodiments. However, another workpiece made of a different material, such as, for example, high tensile steel, may also be considered to be an object to be cut.

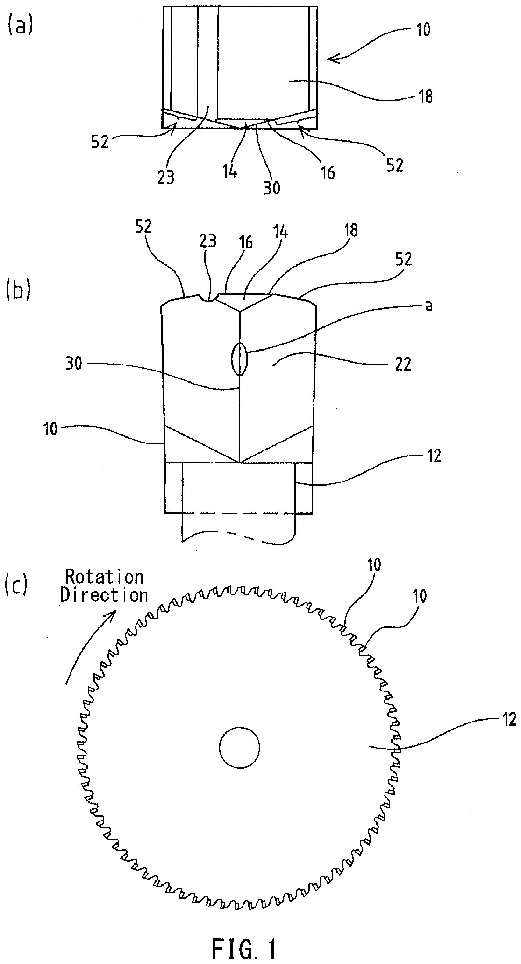

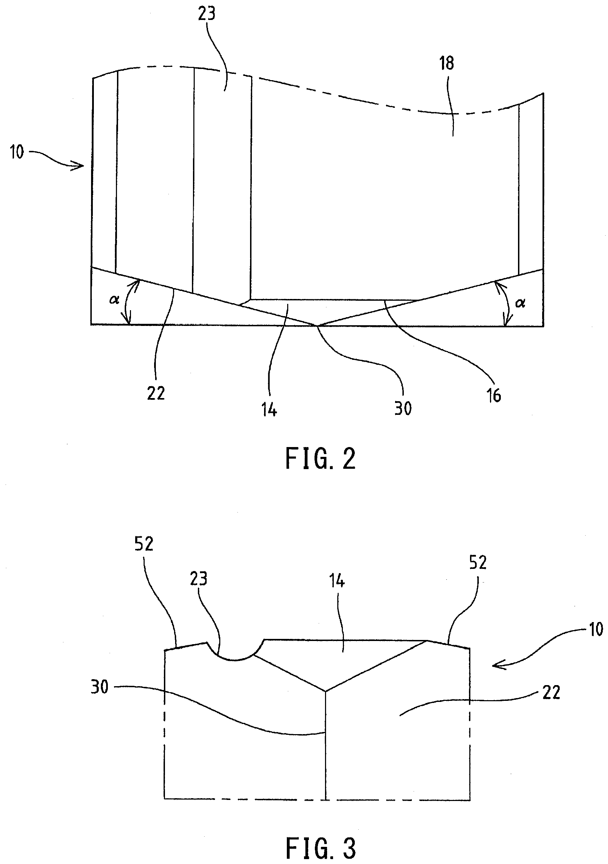

First, FIG. 1(a) is a plan view of a cutting tip 10 according to an exemplary embodiment. The cutting tip 10 is joined to a circular saw blade, as shown in FIG. 1(c). FIG. 1(b) is a front view illustrating a second rake face 22 of the tip 10. As shown in FIGS. 1(a) and (b), the second rake face 22 of the cutting tip 10 of the exemplary embodiment defines second cutting edges 52 on both sides at an intersection line with a flank 18. As also shown in FIGS. 1(a) and 1(b), the second rake face 22 of the cutting tip includes a projection 30 formed by allowing the center of the second rake face 22 to slightly project forward in the rotation direction of the circular saw blade. The projection 30 is formed as projecting from the center of the second rake face 22, so that the second rake face 22 in an inclined state to the left and right, as illustrated in FIG. 2. FIG. 2 shows an enlarged first rake face side of the flank 18. Right and left face bevel angles α shown in FIG. 2 range from 2° to 50°. A first rake angle ranges from -30° to 0°, and a second rake angle from -5° to 10°. Further, when the first rake angle is chamfered between the flank 18 and a lateral side as shown in FIGS. 1(a) and (b), a ridge line between the chamfered face and a rake face defines a cutting edge. If that rake face is the second rake face 22, the cutting edge forms a part of the second cutting edge 52.

Various experiments were conducted on the face bevel angles α inclined to the right and left on the second rake face 22 to find appropriate ranges for the angles. More specifically, the face bevel angles α were changed to 0°, 2 °, 7°, 30°, and 50° and an electric-resistance-welded tube was cut. As the electric-resistance-welded tube was cut, an impact and other stresses applied to the second rake face 22 of the cutting tip were analyzed step by step. During these tests, a stress concentration scar a was generated on the projection 30 in a location shown in FIG. 1(b) due to the impacts. This was observed every time the stress was analyzed. It was found that tip damage or chipping was unlikely to occur since the stress concentration scar a appears in the vicinity of the center of the projection 30 of the second rake face 22. This was observed at every analysis.

Considering the results of analysis, the change in stress applied to the second rake face 22 when the cutting tips start cutting while contacting the workpiece (the weld bead) and cut through the workpiece was found to be well balanced and favorable if the face bevel angles α as measures in the vicinity of the center of the projection 30 fall in the range of equal to or greater than 7° and smaller than 30°. Compared to the cases where the face bevel angles α are 0° and 2°, an area of a stress concentration spot during cutting the workpiece was smaller in the case of 2°. It was also found that the risk of chipping would increase since an intense stress concentration occurs immediately after contacting the workpiece if the face bevel angles α exceeds 30°. However, even when the face bevel angles α are 2° or 50°, it was confirmed that the beneficial effect is sufficiently significant compared with conventional cutting tips with a flat second rake face 22.

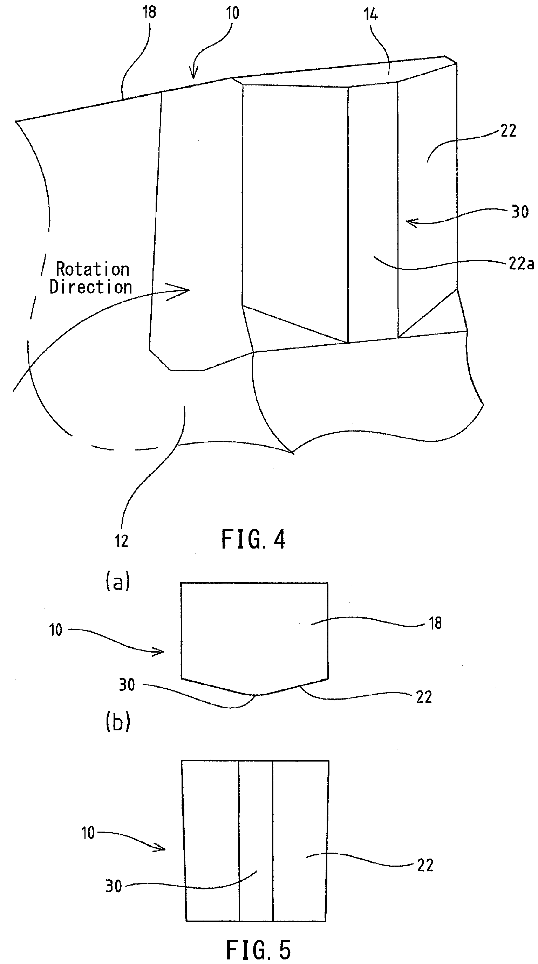

As shown in FIG. 1(b), the projection 30 formed on the second rake face 22 of the cutting tip 10 of FIG. 1 is formed as one line at the intersection line between two faces inclined toward respective sides. However, as alternative exemplary embodiments, as shown in FIG. 4 to FIG. 7, the projection 30 may be formed not in a line between the right and left inclined faces, but formed to have a flat section or rounded section interleaved between inclined faces. For example, FIG. 4 is a perspective view of a cutting tip 10 as one exemplary embodiment. In this exemplary embodiment, the projection 30 of the second rake face 22 vertically projects forward in the rotation direction of the circular saw blade and projects at the center of the second rake face 22. In other words, the projection 30 inclines to the right and left with the flat section 22a interleaved at the center of the second rake face 22.

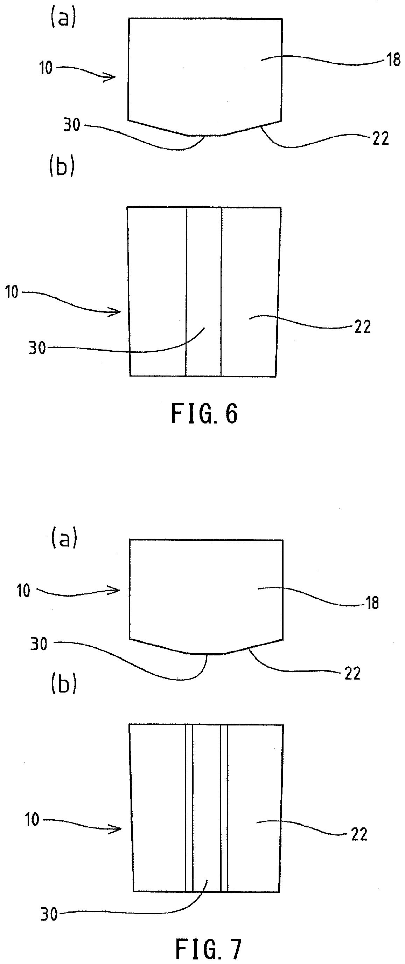

Further, the projection 30 of FIG. 5 is rounded while the projection 30 of FIG. 6 is flat. Furthermore, the projection 30 of FIG. 7 is flat and chamfered. Chipping of the edge may be more likely to occur when the edge bites into the weld bead 26 if a width in an edge thickness direction of a flat surface of the projection 30 exceeds 1mm. However, it was found that the circular saw blade is capable of cutting well even when there is a weld bead 26 if the width of the flat surface of the projection 30 is equal to or narrower than 1mm.

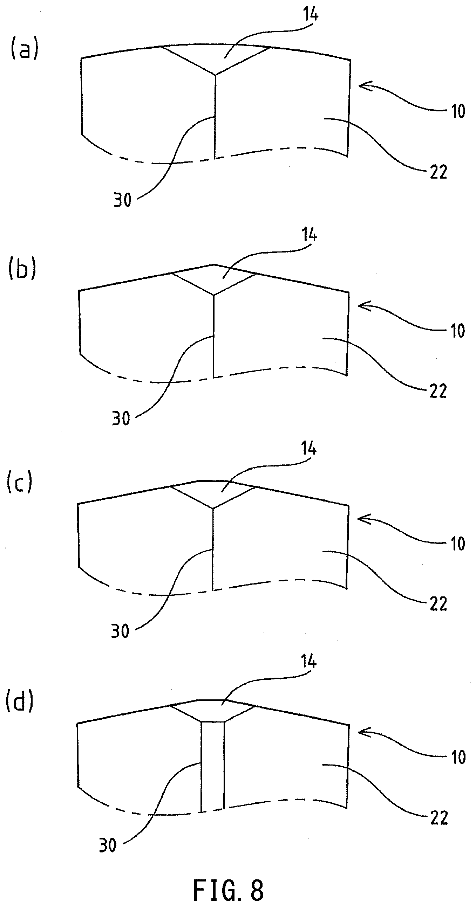

In the present invention, since the center of the second rake face 22 of the cutting tip 10 is allowed to protrude in the rotation direction of the circular saw blade, the flank 18 of the cutting tip 10 comes to be divided in a plurality of sections in a rotational axis direction of the circular saw blade. This results in the first rake face 14 of the cutting tip 10 to form a polygonal shape in the vicinity of the center as shown in FIG. 3. FIGS. 8 (a) to (d) illustrates the first rake face 14 having such a polygonal shape. More specifically, in FIG. 8 (a), the first rake face 14 is formed in a triangular shape (fan shape), and in FIG. 8 (b), the first rake face 14 is formed in a rectangular shape. In FIG. 8 (c), the first rake face 14 is formed in a pentagonal shape, while in FIG. 8 (d), the first rake face 14 is formed in a hexagonal shape.

### Reference Signs List

10 cutting tip, 12 base metal, 14 first rake face, 16 first cutting edge, 18 flank, 22 second rake face, α face bevel angle, 52 second cutting edge

## Claims

1. A circular saw blade having a plurality of cutting tips (10) joined at an outer circumference of a base metal (12), each of the cutting tips (10) comprising:
a first rake face (14) located at a front of the cutting tip in a rotation direction of the circular saw blade;
a flank (18) configured to define a first cutting edge (16) at an intersection line with the first rake face (14), the flank being located at an outer circumference of the circular saw blade; and
a second rake face (22) located at the front of the cutting tip in the rotation direction of the circular saw blade, the second rake face being adjacent to the first rake face (14) on a side of an axis of the circular saw blade,
wherein a center of the second rake face (22) is configured to project forward in the rotation direction of the circular saw blade.

2. The circular saw blade according to claim 1, wherein the second rake face (22) defines a second cutting edge (52) at an intersection line with the flank (18).

3. The circular saw blade according to claim 1, wherein the second rake face (22) is inclined from the center of the second rake face to right and from the center of the second rake face to the left so that the second rake face is formed to project, and wherein face bevel angles (α) of the second rake face range from 2° to 50°.

4. The circular saw blade according to claim 1, wherein the flank (18) is divided into a plurality of sections in a rotational axis direction of the circular saw blade.
